# EUROPÄISCHE PATENTANMELDUNG

(11) **EP 2 868 677 A1**
(43) Veröffentlichungstag der Anmeldung: **06.05.2015**
(21) Anmeldenummer: 13290264.4
(22) Anmeldetag: 30.10.2013
(51) Int. Cl.: C08F 236/06, C08F 236/12, C08L 9/02, C08L 15/00

(54) **Nitrilgruppenhaltiger Copolymerkautschuk**

(71) Anmelder: LANXESS Deutschland GmbH, 50569 Köln (DE)
(72) Erfinder: Obrecht, Werner, Dr., 47447 Moers (DE); Salem, Hiyam, Dr., 50733 Köln (DE); Lieber, Susanna, Dr., 67663 Kaiserslautern (DE); Moll, Irene, Dr., 41468 Neuss (DE); Kaiser, Andreas, Dr., 67000 Strasbourg (FR)

(57) **Zusammenfassung**

Die vorliegende Erfindung betrifft nitrilgruppenhaltige Copolymerkautschuke sowie deren Herstellung, vulkanisierbare Mischungen enthaltend nitrilgruppenhaltige Copolymerkautschuke und deren Herstellung sowie Vulkanisate, basierend auf nitrilgruppenhaltigen Copolymerkautschuken, deren Herstellung und deren Verwendung als technisches Material.

## Beschreibung

Die vorliegende Erfindung betrifft **nitrilgruppenhaltige Copolymerkautschuke,** deren Herstellung, vulkanisierbare Mischungen enthaltend nitrilgruppenhaltige Copolymerkautschuke und deren Herstellung sowie Vulkanisate, basierend auf nitrilgruppenhaltigen Copolymerkautschuken, deren Herstellung und deren Verwendung als technisches Material.

Unter nitrilgruppenhaltigen Copolymerkautschuken (Nitrilkautschuk, abgekürzt auch als **"NBR"** bezeichnet) werden Kautschuke verstanden, bei denen es sich um Co-, Ter- oder Quarterpolymere aus mindestens einem α,β-ethylenisch ungesättigten Nitril, mindestens einem konjugierten Dien und gegebenenfalls einem oder mehreren weiteren copolymerisierbaren Monomeren handelt. Darunter werden explizit auch teilweise oder ganz hydrierte nitrilgruppenhaltige Copolymerkautschuke ("HNBR") subsumiert. Unter hydrierten nitrilgruppenhaltigen Copolymerkautschuk werden entsprechende Co-, Ter- oder Quarterpolymere verstanden, bei denen die C=C-Doppelbindungen der einpolymerisierten Dien-Einheiten ganz oder teilweise hydriert sind.

Sowohl NBR als auch HNBR nehmen seit vielen Jahren einen festen Platz im Bereich der Spezialelastomere ein. Sie verfügen über ein ausgezeichnetes Eigenschaftsprofil in Form einer ausgezeichneten Ölbeständigkeit, einer guten Hitzebeständigkeit und einer hervorragenden Beständigkeit gegen Ozon und Chemikalien, wobei letztere im Fall des HNBR noch ausgeprägter als beim NBR ist. NBR und HNBR weisen ferner sehr gute mechanische sowie anwendungstechnische Eigenschaften auf. Aus diesem Grund finden sie breite Verwendung in den verschiedensten Anwendungsgebieten und werden beispielsweise eingesetzt zur Herstellung von Dichtungen, Schläuchen, Riemen und Dämpfungselementen im Automobilsektor, ferner für Statoren, Bohrlochdichtungen und Ventildichtungen im Bereich der Ölförderung sowie auch für zahlreiche Teile der Elektroindustrie, des Maschinen- und Schiffsbaus. Eine der Hauptanwendung für **HNBR** ist der Antriebsriemen. In der Automobilindustrie geht ein Trend in die Richtung, statt Metallketten oder Außenantrieben innenliegende Riemen zu verwenden, um kompaktere Bauweisen des Motors mit geringeren Gewichten zu ermöglichen. Dabei arbeiten diese Riemen direkt im Motorenöl, wobei die Temperaturen im Motorraum bis zu 150°C betragen können. Um einen störungsfreien Betrieb des Motors zu ermöglichen, sollte der Riemen nur eine **minimale Ölquellung** aufweisen. Gleichzeitig ist es wünschenswert, dass der Riemen eine **sehr gute Tieftemperaturflexibilität** bis -35°C aufweist. Letztere verhindert das Reißen des Riemens beim Start des Motors bei tiefen Temperaturen. Kommerziell erhältlich sind eine Vielzahl unterschiedlicher HNBR-Typen, die sich je nach Anwendungsbereich durch unterschiedliche Monomere, Molekulargewichte, Polydispersitäten sowie mechanische und physikalische Eigenschaften auszeichnen. Neben den Standardtypen werden vor allem Spezialtypen, die sich durch Gehalte spezieller Termonomere oder besondere Funktionalisierungen auszeichnen, zunehmend nachgefragt.

So offenbart EP 2145920 A1 beispielsweise eine vulkanisierbare Polymerzusammensetzung enthaltend Dien-Monomere, Nitrilmonomere, sowie verschiedene Termonomere, beispielsweise Carbonsäuren und deren Ester, welche durch eine spezifische Kombination von Polyamin-Vernetzungs-Reagenzien und speziellen Vernetzungsbeschleunigern gekennzeichnet ist. Polymervulkanisate auf der Basis solcher Polymerzusammensetzungen sowie Verfahren zur Herstellung solcher Polymervulkanisate sind beschrieben, insbesondere Formteile.

EP 2392599 A1 offenbart einen nitrilgruppenhaltigen hochgesättigten quarternären Dienkautschuk enthaltend 5 bis 60 Gew.-% α,β-ethylenisch ungesättigte Nitrileinheiten, 0,1 bis 20 Gew.-% α,β-ethylenisch ungesättigter Dicarbonsäuremonoester als vernetzbare Monomere, 11 bis 50 Gew.-% (Meth)acrylsäurealkoxyalkylester Monomereinheiten, und 20 bis 83,9 Gew.-% konjugierte Dienmonomereinheiten, welche zumindest teilweise hydriert sind und verbesserte Tieftemperaturbeständigkeit aufweisen.

EP 1852447 A1 offenbart einen hochgesättigten nitrilgruppenhaltigen Terpolymer-Kautschuk mit 10 bis 40 Gew.-% α,β-ethylenisch ungesättigten Nitrileinheiten, 10 bis 60 Gew.-% α,β-ethylenisch ungesättigte Carboxylsäureestereinheiten, wie beispielsweise Butylacrylat und Ethylhexylacrylat, und 20 bis 70 Gew.-% einer konjugierten Dieneinheit, welches ein Vulkanisat mit ausgewogenen Eigenschaften aufweist.

EP 1247835 A offenbart einen nitrilgruppenhaltigen hochgesättigten Copolymerkautschuk enthaltend (a) 10 bis 40 Gew.-% α,β-ethylenisch ungesättigte Nitrileinheiten, (b) 10 bis 60 Gew.-% α,β-ethylenisch ungesättigte Carbonsäure Estereinheiten, (c) 0,01 bis 21 Gew.-% konjugierter Dieneinheiten und 14 bis 69,99 Gew.-% gesättigter konjugierter Dieneinheiten, wobei die Summe der Monomereinheiten (c) und (d) 20 bis 70 Gew.-% beträgt und das Verhältnis der Monomereinheiten (d)/[(c)+(d)] wenigstens 70 Gew.-% beträgt und die Differenz zwischen der extrapolierten Anfangstemperatur des Glasübergangs (Tig) und der extrapolierten Endtemperatur des Glasübergangs (Teg) nicht größer als 10°C ist. Die vulkanisierten Produkte des Copolymer-Kautschuks weisen gute Kältebeständigkeit, Ölbeständigkeit und gute dynamische Eigenschaften auf.

Weiterhin ist in EP 1243602 A ein Terpolymer offenbart enthaltend (a) 0 bis 20 Gew.-% 1,3-Butadieneinheiten, (b) 0 bis 50 Gew.-% gesättigte 1,3-Butadieneinheiten, (c) 40 bis 50 Gew.-% α,β-ethylenisch ungesättigte Nitrileinheiten, und (d) 10 bis 35 Gew.-% und zumindest 8 Mol.-% anderer Monomereinheiten, wobei die Summe der 1,3-Butadieneinheiten (a) und der gesättigten 1,3-Butadieneinheiten (b) im Bereich von 30 bis 50 Gew.-% ist. Dieser nitrilgruppenhaltige hoch gesättigte Copolymer-Kautschuk weist im vulkanisierten Produkt gute Ölbeständigkeit auf. Beispiele von Terpolymeren mit einem geringen Termonomergehalt von 3 und 8 Gew.-% Butylacrylat sind als Vergleichsbeispiele offenbart.

JP 2012-031311 A beschreibt einen nitrilgruppenhaltigen, hochgesättigten Copolymer-Kautschuk enthaltend (a) 10,0 bis 40,0 Gew.-% α,β-ethylenisch ungesättigte Nitrileinheiten, (b) 5,5 bis 10,0 Gew.-% α,β-ethylenisch ungesättigte Dicarbonsäure Monoestereinheiten, (c) 11,0 bis 30,0 Gew.-% Alkoxyalkylester (Meth)acrylateinheiten mit Alkoxyalkyl-Gruppen mit 2 bis 8 Kohlenstoffatomen, und (d) 20,0 bis 73,5 Gew.-% konjugierte Dieneinheiten, wobei zumindest ein Teil der konjugierten Dieneinheiten hydriert ist.

Li et al. offenbart in J. Polym. Res. 2012, 19, 9853 das Aufpolymerisieren von Polyethylenglykolmonoalkylether auf XNBR. Das Aufpolymerisieren der Polyethylenglycolsmonoalkylether senkt dabei die Glasübergangstemperatur der ab. Es sind keine Informationen bezüglich der Ölbeständigkeit von Vulkanisaten zu entnehmen.

Die bisherigen Typen nitrilgruppenhaltiger Copolymer-Kautschuke erfüllen die Anforderung einer minimalen Ölquellung sowie einer sehr guten Tieftemperaturflexibilität nur teilweise, da sich die Ölquellung und die Tieftemperaturflexibilität (Glasübergangstemperatur Tg) nicht unabhängig voneinander einstellen lassen. Typischerweise bestehen bei HNBR Zusammenhänge zwischen dem ACN-Gehalt, der Glasübergangstemperatur, sowie der Ölquellung. Dies bedeutet, dass bei steigendem ACN-Gehalt, d.h. erhöhter Polarität, die Ölquellung abnimmt. Gleichzeitig steigt jedoch die Glasübergangstemperatur. Versuche, durch Einbau von verschiedenen Termonomeren eine Reduzierung der Glasübergangstemperatur bei gleichbleibender Ölquellung oder eine Reduktion der Ölquellung bei gleichbleibender Glasübergangstemperatur zu erreichen, waren in der Vergangenheit nicht erfolgreich. Somit sind die bekannten Terpolymere für bestimmte Anwendungszwecke noch nicht befriedigend.

Demgemäß lag eine **Aufgabe** der vorliegenden Erfindung in der Bereitstellung eines nitrilgruppenhaltigen Copolymerkautschuks mit ausgewogen guter Tieftemperaturbeständigkeit und/oder Ölbeständigkeit, der die Nachteile des Standes der Technik überwindet.

Die **Lösung** der Aufgabe und Gegenstand der vorliegenden Erfindung ist nun ein nitrilgruppenhaltiger Copolymerkautschuk, enthaltend
a) 10 bis 60 Gew.-%, bevorzugt 20 bis 50 Gew.-% und besonders bevorzugt 34 bis 43 Gew.-% einer α,β-ethylenisch ungesättigten Nitrileinheit,
b) 31 bis 89,0 Gew.-%, bevorzugt 42 bis 78,75 Gew.-% und besonders bevorzugt 49 bis 64,5 Gew.-% einer konjugierten Dieneinheit und
c) 1 bis 9 Gew.-%, bevorzugt 1,25 bis 8 Gew.-% und besonders bevorzugt 1,5 bis 8 Gew.-% zumindest einer α,β-ethylenisch ungesättigten Monocarbonsäure Monoestereinheit.

In einer alternativen erfindungsgemäßen Ausführungsform ist zumindest ein Teil der konjugierten Dieneinheiten hydriert.

Es sei an dieser Stelle angemerkt, dass der Rahmen der Erfindung alle beliebigen und möglichen Kombinationen der oben stehenden und im Folgenden aufgeführten, allgemeinen oder in Vorzugsbereichen genannten Komponenten, Wertebereiche bzw. Verfahrensparameter umfasst.

Der Begriff **Copolymer** umfasst Polymer mit mehr als einer Monomereinheit. In einer Ausführungsform der Erfindung ist das Copolymer beispielsweise ausschließlich abgeleitet von den drei beschriebenen Monomertypen (a), (b) und (c) und ist daher ein **Terpolymer.** Ebenso umfasst vom Begriff Copolymer sind beispielsweise weiterhin **Quaterpolymere,** abgeleitet von den drei beschriebenen Monomertypen (a), (b) und (c) und einer weiteren Monomereinheit.

### α,β-ethylenisch ungesättigtes Nitril

Als **α,β-ethylenisch ungesättigtes Nitril,** das die **α,β-ethylenisch ungesättigten Nitrileinheiten (a)** bildet, kann jedes bekannte α,β-ethylenisch ungesättigte Nitril eingesetzt werden. Bevorzugt sind (C₃-C₅)-α,β-ethylenisch ungesättigte Nitrile wie Acrylnitril, α-Haloacryinitril wie beispielsweise α-Chloracrylnitril und α-Bromacrylnitril, α-Alkylacrylnitril wie beispielsweise Methacrylnitril, Ethacrylnitril oder Mischungen aus zwei oder mehr α,β-ethylenisch ungesättigten Nitrilen. Besonders bevorzugt ist Acrylnitril, Methacrylnitril, Ethacrylnitril oder Mischungen. Ganz besonders bevorzugt ist Acrylnitril.

Die **Menge an α,β-ethylenisch ungesättigten Nitrileinheiten (a)** ist typischerweise im Bereich von 10 bis 60 Gew.-%, bevorzugt 20 bis 50 Gew.-%, besonders bevorzugt von 34 bis 43 Gew.-% bezogen auf die Gesamtmenge von 100 Gew.-% aller Monomereinheiten.

### Konjugiertes Dien

Das **konjugierte Dien,** das die **konjugierte Dieneinheit (b)** bildet, kann von jeder Natur sein, insbesondere konjugierte C₄-C₁₂-Diene. Besonders bevorzugt sind, 1,3-Butadien, Isopren, 2,3-Dimethylbutadien, 1,3-Pentadien (Piperylen) oder Gemische daraus. Insbesondere bevorzugt sind 1,3-Butadien und Isopren oder Gemische daraus. Ganz besonders bevorzugt ist 1,3-Butadien.

Die **Menge an konjugiertem Dien** ist typischerweise im Bereich von 31 bis 89,0 Gew.-%, bevorzugt 42 bis 78,75 Gew.-% und besonders bevorzugt 49 bis 64,5 Gew.-%, bezogen auf die Gesamtmenge von 100 Gew.-% aller Monomereinheiten.

### α,β-ethylenisch ungesättigte Monocarbonsäure Monoestereinheit

Zusätzlich zu den α,β-ethylenisch ungesättigten Nitrileinheiten und den konjugierten Dieneinheiten weist der nitrilgruppenhaltige Copolymerkautschuk als dritte Einheit **α,β-ethylenisch ungesättigte Monocarbonsäure Monoestereinheiten** auf.

Bei **α,β-ethylenisch ungesättigten Monocarbonsäure Monoestereinheiten** kann es sich beispielsweise um solche, abgeleitet von (Meth)acrylaten [(Meth)acrylate steht im Rahmen dieser Erfindung für "Acrylate" und "Methylacrylate"] und deren Derivaten oder Mischungen davon handeln.

Als Monomere für die **α,β-ethylenisch ungesättigten Monocarbonsäure Monoestereinheiten** sind die folgenden bevorzugt
Alkyl(meth)acrylat, insbesondere C₄-C₂₀-Alkyl(meth)acrylat, n-Butyl(meth)acrylat, tert.-Butyl(meth)acrylat, Hexyl(meth)acrylat, 2-Ethylhexyl(meth)acrylat, Octyl(meth)acrylat, 2-Propylheptylacrylat und n-Dodecyl(meth)acrylat,
Alkoxyalkyl(meth)acrylat, insbesondere C₁-C₁₈-Alkoxyalkyl(meth)acrylat, vorzugsweise Methoxymethyl(meth)acrylat, Methoxyethyl(meth)acrylat, Ethoxyethyl(meth)acrylat und Ethoxymethyl(meth)acrylat,
Aryl(meth)acrylat, insbesondere C₆-C₁₄-Aryl(meth)acrylat, vorzugsweise C₆-C₁₀-Aryl(meth)acrylat,
Cycloalkyl(meth)acrylat, insbesondere C₅-C₁₂-Cycloalkyl(meth)acrylat, vorzugsweise C₆-C₁₂-Cycloalkyl(meth)acrylat,
Cyanoalkyl(meth)acrylat, insbesondere C₄-C₁₈-Cyanoalkyl(meth)acrylat, vorzugsweise α-Cyanoethyl(meth)acrylat, β-Cyanoethyl(meth)acrylat und Cyanobutyl(meth)acrylat,
Hydroxyalkyl(meth)acrylat, insbesondere C₄-C₁₈-Hydroxyalkyl(meth)acrylat, vorzugsweise 2-Hydroxyethyl(meth)acrylat, und 3-Hydroxypropyl(meth)acrylat,
Fluor-substituiertes benzylgruppenhaltiges (Meth)acrylat, vorzugsweise Fluorbenzyl(meth)acrylat,
Fluoralkylgruppenhaltiges (Meth)acrylat, vorzugsweise Trifluorethyl(meth)acrylat, und
Aminoalkylgruppenhaltiges (Meth)acrylat wie Dimethylaminomethylacrylat und Diethylaminoethylacrylat.

Weitere bevorzugte α,β-ungesättigte Monocarbonsäure Monoestereinheiten sind solche, abgeleitet von **Polyethylenglycol(meth)acrylat,** Polypropylenglycol(meth)acrylat, Polyethylenpropylenglycol(meth)acrylate, Glycidyl(meth)acrylat, Epoxy(meth)acrylat, oder Urethan(meth)acrylat, bevorzugt Methoxy- oder Ethoxy- Polyethylenglycol(meth)acrylat mit 1 bis 20 Ethylenglycol-Wiederholungseinheiten, bevorzugt Methoxy- oder Ethoxy-Polyethylenglycol(meth)acrylat mit 1 bis 5 **Ethylenglycol-Wiederholungseinheiten** ist.

Diese α,β-ethylenisch ungesättigte Monocarbonsäure Monoester können kommerziell erworben werden, beispielsweise bei GEO unter dem Handelsnamen Bisomer® oder bei Miwon unter dem Handelsnamen Miramer®.

Die **Menge** der α,β-ethylenisch ungesättigten Monocarbonsäuren Monoester ist typischerweise im Bereich von 1 bis 9 Gew.-%, bevorzugt 1,25 bis 8 Gew.-% und besonders bevorzugt 1,5 bis 8 Gew.-% bezogen auf die Gesamtmenge von 100 Gew.-% aller Monomereinheiten.

Ein bevorzugter erfindungsgemäßer nitrilgruppenhaltiger Copolymerkautschuk weist als α,β-ethylenisch ungesättigte Nitrileinheit (a) Acrylnitril oder Methacrylnitril, besonders bevorzugt **Acrylnitril,** als konjugierte Dieneinheit (b) Isopren oder 1,3-Butadien, besonders bevorzugt **1,3-Butadien,** und als α,β-ethylenisch Monocarbonsäure Monoestereinheit (c) Butylacrylat, Methoxyethylmethacrylat oder Polyethylenglycol(meth)acrylat, besonders bevorzugt **Polyethylenglycol(meth)acrylat** mit 5 Ethylenglycol-Wiederholungseinheiten auf.

Zusätzlich kann der nitrilgruppenhaltige Copolymerkautschuk ein oder mehrere **weitere copolymerisierbare Monomere** in einer Menge von 0,1 bis 10 Gew.-%, bevorzugt 0,1 bis 5 Gew.-% enthalten. Die Mengen der übrigen Monomereinheiten werden dann geeignet reduziert, so dass die Summe immer 100 Gew.-% ergibt. Als weitere copolymerisierbare Monomere können beispielsweise
- **aromatische Vinylmonomere,** bevorzugt Styrol, α,β-Styrol, α-Methylstyrol und Vinylpyridin,
- **fluorhaltige Vinylmonomere,** bevorzugt Fluorethylvinylether, Fluorpropylvinylether, o-Fluormethylstyrol, Vinylpentafluorbenzoat, Difluorethylen und Tetrafluorethylen, oder auch
- **α-Olefine,** bevorzugt C₂-C₁₂-Olefine wie beispielsweise Ethylen, 1-Buten, 4-Buten, 4-Methyl-1-Penten, 1-Hexen oder 1-Octen,
- **nicht-konjugierte Diene,** bevorzugt C₄-C₁₂-Diene wie, 1,4-Pentadien, 1,4-Hexadien, 4-Cyanocyclohexen, 4-Vinylcyclohexen, Vinylnorbonen, Dicyclopentadien oder auch
- **Alkine,** wie 1- oder 2-Butin,
- **α,β-ethylenisch ungesättigte Monocarbonsäuren** bevorzugt Acrylsäure, Methacrylsäure, Crotonsäure oder Zimtsäure,
- **α,β-ethylenisch ungesättigte Dicarbonsäuren** bevorzugt Maleinsäure, Fumarsäure, Citraconsäure, Itakonsäure,
- **α,β-ethylenisch ungesättigte Dicarbonsäure Monoestern** wie beispielsweise
   ○ Alkyl-, insbesondere C₄-C₁₈-Alkyl-, bevorzugt n-Butyl-, tert.-Butyl-, n-Pentyl- oder n-Hexyl-, besonders bevorzugt Mono-n-butylmaleat, Mono-n-butylfumarat, Mono-n-butylcitraconat, Mono-n-butylitaconat;
   ○ Alkoxyalkyl-, insbesondere C₄-C₁₈-Alkoxyalkyl-, bevorzugt C₄-C₁₂-Alkoxyalkyl-,
   ○ Hydroxyalkyl-, insbesondere C₄-C₁₈-Hydroxyalkyl-, bevorzugt C₄-C₁₂-Hydroxyalkyl-,
   ○ Cycloalkyl-, insbesondere C₅-C₁₈-Cycloalkyl-, bevorzugt C₆-C₁₂-Cycloalkyl, besonders bevorzugt Monocyclopentylmaleat, Monocyclohexylmaleat, Monocycloheptylmaleat, Monocyclopentylfumarat, Monocyclohexylfumarat, Monocycloheptylfumarat, Monocyclopentylcitraconat, Monocyclohexylcitraconat, Monocycloheptylcitraconat, Monocyclopentylitaconat, Monocyclohexylitaconat und Monocycloheptylitaconat,
   ○ Alkylcycloalkyl-, insbesondere C₆-C₁₂-Alkylcycloalkyl-, bevorzugt C₇-C₁₀-Alkylcycloalkyl, besonders bevorzugt Monomethylcyclopentylmaleat und Monoethylcyclohexylmaleat, Monomethylcyclopentylfumarat und Monoethylcyclohexylfumarat, Monomethylcyclopentylcitraconat und Monoethylcyclohexylcitraconat; Monomethylcyclopentylitaconat und Monoethylcyclohexylitaconat;
   ○ Aryl-, insbesondere C₆-C₁₄-Aryl-Monoester, bevorzugt Maleinsäuremonoarylester, Fumarsäuremonoarylester, Citraconsäuremonoarylester oder Itaconsäuremonoarylester, besonders bevorzugt Monophenylmaleat oder Monobenzylmaleat, Monophenylfumarat oder Monobenzylfumarat, Monophenylcitraconat oder Monobenzylcitraconat, Monophenylitaconat oder Monobenzylitaconat oder Mischungen davon,
   ○ ungesättigte Polycarboxylsäurepolyalkylester wie beispielsweise Dimethylmaleat, Dimethylfumarat, Dimethylitaconate oder Diethylitaconate; oder
   ○ aminogruppenhaltige α,β-ethylenisch ungesättigte Carboxylsäureester wie beispielsweise Dimethylaminomethylacrylat oder Diethylaminoethylacrylat
- **Copolymerisierbare Antioxidantien,** beispielsweise N-(4-Anilinphenyl)acrylamid, N-(4-Anilinphenyl)methacrylamid, N-(4-Anilinphenyl)cinnamamid, N-(4-Anilinphenyl)crotonamid, N-Phenyl-4-(3-vinylbenzyloxy)anilin, N-Phenyl-4-(4-vinylbenzyloxy)anilin oder
- **Vernetzbare Monomere,** beispielsweise Divinyl-Komponenten wie beispielsweise Divinylbenzol; Di(meth)acrylsäureester wie beispielsweise Ethylenglycoldi(meth)acrylat, Diethylenglycoldi(meth)acrylat Butandioldi(meth)acrylat oder Polyethylenglycoldi(meth)acrylat oder Tri(meth)acrylsäureester wie beispielsweise Trimethylolpropantri(meth)acrylat; selbstvernetzbare Monomere wie beispielsweise N-Methylol(meth)acrylamid oder N, N'-Dimethylol(meth)acrylamid
verwendet werden.

Der erfindungsgemäße nitrilgruppenhaltige Copolymerkautschuk weist typischerweise ein Zahlenmittel des Molekulargewichts (Mn) von 10,000 bis 2,000,000 g/mol, bevorzugt 50,000 bis 1,000,000 g/mol, besonders bevorzugt 100,000 bis 500,000 g/mol und ganz besonders bevorzugt 150,000 bis 300,000 g/mol auf.

Der erfindungsgemäße nitrilgruppenhaltige Copolymerkautschuk weist typischerweise einen Polydispersitätsindex (PDI=M_{w}/Mₙ, wobei M_{w} das Gewichtsmittel des Molekulargewichts darstellt) von 1,5 bis 6, bevorzugt 2 bis 5 und besonders bevorzugt 2,5 bis 4 auf.

Der erfindungsgemäße nitrilgruppenhaltige Copolymerkautschuk weist typischerweise eine Mooney Viskosität (ML1+4@100°C) von 10 bis 150, bevorzugt von 20 bis 120 und besonders bevorzugt von 25 bis 100 auf.

Der erfindungsgemäße nitrilgruppenhaltige Copolymerkautschuk ist dadurch gekennzeichnet, dass
- die Glastemperatur, gemessen nach der in der Beschreibung angegebenen Messmethode, einen Wert von -20°C unterschreitet, bevorzugt einen Wert von -23°C unterschreitet und besonders bevorzugt einen Wert von -25°C unterschreitet, oder
- die Ölquellung, gemessen nach der in der Beschreibung angegebenen Messmethode, einen Wert von 20%, bevorzugt einen Wert von 18% und besonders bevorzugt einen Wert von 15% nicht überschreitet, oder
- die Glastemperatur, gemessen nach der in der Beschreibung angegebenen Messmethode, einen Wert von -20°C unterschreitet, bevorzugt einen Wert von -23°C unterschreitet und besonders bevorzugt einen Wert von -25°C unterschreitet, und die Ölquellung, gemessen nach der in der Beschreibung angegebenen Messmethode, einen Wert von 20%, bevorzugt einen Wert von 18% und besonders bevorzugt einen Wert von 15% nicht überschreitet.

### Verfahren zur Herstellung nitrilgruppenhaltiger Copolymerkautschuke

Das Verfahren zur Herstellung der vorgenannten nitrilgruppenhaltigen Copolymerkautschuke durch Polymerisation der vorgenannten Monomere ist in der Literatur (z.B. Houben-Weyl, Methoden der Organischen Chemie Bd.14/1, 30 Georg Thieme Verlag Stuttgart 1961) umfangreich beschrieben und ist nicht im Besonderen beschränkt. Im Allgemeinen handelt es sich um ein Verfahren in dem α,β-ethylenisch ungesättigte Nitrileinheiten, konjugierte Dieneinheiten, und α,β-ethylenisch ungesättigte Monocarbonsäure Monoester nach Belieben copolymerisiert werden. Als Polymerisationsverfahren kann jedes bekannte Emulsions-Polymerisationsverfahren, Suspensions-Polymerisationsverfahren, Bulk-Polymerisationsverfahren und Lösungs-Polymerisationsverfahren verwendet werden. Bevorzugt ist dabei das EmulsionsPolymerisationsverfahren. Unter Emulsionspolymerisation wird insbesondere ein an sich bekanntes Verfahren verstanden, bei dem als Reaktionsmedium meist Wasser verwendet wird (s. u.a. Römpp Lexikon der Chemie, Band 2, 10. Auflage 1997; P. A. Lovell, M. S. El-Aasser, Emulsion Polymerization and Emulsion Polymers, John Wiley & Sons, ISBN: 0471 96746 7; H. Gerrens, Fortschr. Hochpolym. Forsch. 1, 234 (1959)). Die Einbaurate des Termonomers kann durch den Fachmann ohne weiteres so eingestellt werden, das ein erfindungsgemäßes Terpolymer erhalten wird.

### Metathese

Es ist auch möglich, dass sich an die Herstellung der nitrilgruppenhaltigen Copolymerkautschuke eine Metathese-Reaktion zur Reduktion des Molekulargewichts des nitrilgruppenhaltigen Copolymerkautschuke oder eine Metathese-Reaktion und eine nachfolgende Hydrierung oder nur eine Hydrierung anschließt. Diese Metathese- bzw. Hydrierungsreaktionen sind bei dem Fachmann hinlänglich bekannt und in der Literatur beschrieben. Die Metathese ist beispielsweise aus WO-A-02/100941 sowie der WO-A-02/100905 bekannt und kann zum Molekulargewichtsabbau eingesetzt werden.

### Hydrierung

In einer alternativen Ausführungsform ist es weiterhin möglich, im Anschluss an die Copolymerisation der nitrilgruppenhaltigen Copolymerkautschuke diese, zumindest teilweise, zu hydrieren (Wasserstoff-Additions-Reaktion). In solchen zumindest teilweise hydrierten nitrilgruppenhaltigen Copolymerkautschuken ist zumindest ein Teil der C=C-' Doppelbindungen der vom konjugierten Dien abgeleiteten Wiederholungseinheit spezifisch hydriert. Der Grad der Hydrierung der konjugierten Dieneinheiten (b) ist in einer alternativen Ausführungsform bevorzugt 50 % oder mehr, bevorzugt 75 % oder mehr und besonders bevorzugt 85 % oder mehr.

Die Hydrierung von nitrilgruppenhaltigen Copolymerkautschuken ist bekannt, beispielsweise aus US A 3 700 637, DE A 2 539 132, DE A 3 046 008, DE A 3 046 251, DE A 3 227 650, DE A 3 329 974, EP A-111 412, FR-B 2 540 503. Hydrierte nitrilgruppenhaltigen Copolymerkautschuke zeichnen sich durch hohe Reißfestigkeit, geringen Abrieb, niedrige bleibende Verformung nach Druck und Zugbeanspruchung und gute Ölbeständigkeit, vor allem aber durch bemerkenswerte Stabilität gegen thermische und oxidative Einflüsse aus.

### Vulkanisierbare Mischungen enthaltend nitrilgruppenhaltigen Copolymerkautschuk

Gegenstand der vorliegenden Erfindung sind ferner **vulkanisierbare Mischungen** enthaltend den nitrilgruppenhaltigen Copolymerkautschuk und mindestens einen Vernetzer. In einer bevorzugten Ausführungsform handelt es sich um vulkanisierbare Mischungen, die zusätzlich mindestens einen Füllstoff enthalten.

### Andere optionale Komponenten:

Optional können derartige vulkanisierbare Mischungen auch noch ein oder mehrere dem Fachmann für Kautschuke **geläufige Additive und Faserstoffe** enthalten. Diese umfassen Alterungsschutzmittel, Reversionsschutzmittel, Lichtschutzmittel, Ozonschutzmittel, Verarbeitungshilfsmittel, Weichmacher, Mineralöle, Tackifier, Treibmittel, Farbstoffe, Pigmente, Wachse, Harze, Streckmittel, Füllstoffe, Ruße, Kieselsäuren, pyrogene Kieselsäure, Naturstoffe wie z.B. Clay, Kaoline, Wolastonit, organische Säuren, Vulkanisationsverzögerer, Metalloxide, Aramidfasern, Salze von ungesättigten Carbonsäuren wie beispielsweise Zinkdiacrylat (ZDA) und Zinkdimethylacrylat (ZDMA), flüssige Acrylate, sowie weitere Füllstoffaktivatoren, wie beispielsweise Triethanolamin, Trimethylolpropan, Polyethylenglykol, Hexantriol, aliphatische Trialkoxysilane oder anderen Additive, die in der Gummiindustrie bekannt sind (Ullmann's Encyclopedia of Industrial Chemistry, VCH Verlagsgesellschaft mbH, D-69451 Weinheim, 1993, vol A 23 "Chemicals and Additives", S. 366-417).

Als **Vernetzer** kommen beispielsweise **peroxidische Vernetzer** in Frage wie Bis(2,4-dichlorbenzyl)peroxid, Dibenzoylperoxid, Bis(4-chlorbenzoyl)peroxid, 1,1-Bis-(t-butylperoxy)-3,3,5-trimethylcyclohexan, tert-Butylperbenzoat, 2,2 Bis(t-butylperoxy)buten, 4,4-di-tert.Butylperoxynonylvalerat, Dicumylperoxid, 2,5-Dimethyl-2,5-di(t-butylperoxy)hexan, tert-Butylcumylperoxid, 1,3-Bis(t-butylperoxyisopropyl)benzol, Di-t-butylperoxid und 2,5-Dimethyl-2,5-di(t-butylperoxy)-hexyn-3.

Es kann vorteilhaft sein, neben diesen peroxidischen Vernetzern noch weitere Zusätze zu verwenden, mit deren Hilfe die **Vernetzungsausbeute erhöht** werden kann: Hierfür sind beispielsweise Triallylisocyanurat, Triallylcyanurat, Trimethylolpropantri(meth)acrylat, Triallyltrimellithat, Ethylenglycoldimethacrylat, Butandioldimethacrylat, Zinkdiacrylat, Zinkdimethacrylat, 1,2-Polybutadien oder N,N'-m-Phenylenbismaleinimid geeignet.

Die **Gesamtmenge des oder der Vernetzer** liegt üblicherweise im Bereich von 1 bis 20 phr, bevorzugt im Bereich von 1,5 bis 15 phr und besonders bevorzugt im Bereich von 2 bis 10 phr, bezogen auf den nitrilgruppenhaltigen Copolymerkautschuk.

Als **Vernetzer** können auch Schwefel in elementarer löslicher oder unlöslicher Form oder Schwefelspender eingesetzt werden.

Als **Schwefelspender** kommen beispielsweise Dimorpholyldisulfid (DTDM), 2-Morpholino-dithiobenzothiazol (MBSS), Caprolactamdisulfid, Dipentamethylenthiuramtetrasulfid (DPTT), und Tetramethylthiuramdisulfid (TMTD) in Frage.

Auch bei der **Schwefelvulkanisation** des erfindungsgemäßen nitrilgruppenhaltigen Copolymerkautschuk ist es möglich, noch weitere Zusätze zu verwenden, mit deren Hilfe die Vernetzungsausbeute erhöht werden kann. Grundsätzlich kann die Vernetzung aber auch mit Schwefel oder Schwefelspendern allein erfolgen.

Umgekehrt kann die Vernetzung der erfindungsgemäßen nitrilgruppenhaltigen Copolymerkautschuke aber auch nur in Gegenwart der oben genannten Zusätze erfolgen, d.h. ohne Zusatz von elementarem Schwefel oder Schwefelspendern.

Als **Zusätze,** mit deren Hilfe die Vernetzungsausbeute erhöht werden kann, eignen sich z.B. Dithiocarbamate, Thiurame, Thiazole, Sulfenamide, Xanthogenate, Guanidinderivate, Caprolactame und Thioharnstoffderivate.

Als **Dithiocarbamate** können beispielsweise eingesetzt werden: Ammoniumdimethyldithiocarbamat, Natriumdiethyldithiocarbamat (SDEC), Natriumdibutyl-dithiocarbamat (SDBC), Zinkdimethyldithiocarbamat (ZDMC), Zinkdiethyldithiocarbamat (ZDEC), Zinkdibutyldithio-carbamat (ZDBC), Zinkethylphenyldithiocarbamat (ZEPC), Zinkdibenzyldithiocarbamat (ZBEC), Zinkpentamethylendithiocarbamat (Z5MC), Tellurdiethyldithiocarbamat, Nickeldibutyldithio-carbamat, Nickeldimethyldithiocarbamat und Zinkdiisononyldithiocarbamat.

Als **Thiurame** können zum Beispiel eingesetzt werden: Tetramethylthiuramdisulfid (TMTD), Tetramethylthiurammonosulfid (TMTM), Dimethyldiphenylthiuramdisulfid, Tetrabenzylthiuram-disulfid, Dipentamethylenthiuramtetrasulfid und Tetraethylthiuramdisulfid (TETD),

Als **Thiazole** können zum Beispiel eingesetzt werden: 2-Mercaptobenzothiazol (MBT), Dibenzthiazyldisulfid (MBTS), Zinkmercaptobenzothiazol (ZMBT) und Kupfer-2-mercaptobenzo-thiazol.

Als **Sulfenamidderivate** können zum Beispiel eingesetzt werden: N-Cyclohexyl-2-benzothiazylsulfenamid (CBS), N-tert.-Butyl-2-benzthiazylsulfenamid (TBBS), N,N'-Dicyclo-hexyl-2-benzthiazylsulfenamid (DCBS), 2-Morpholinothiobenzthiazol (MBS), N-Oxydiethylen-thiocarbamyl-N-tert.butylsulfenamid und Oxydiethylenthiocarbamyl-N-oxyethylensulfenamid.

Als **Xanthogenate** können zum Beispiel eingesetzt werden: Natriumdibutylxanthogenat, Zinkisopropyldibutylxanthogenat und Zinkdibutylxanthogenat.

Als **Guanidinderivate** können zum Beispiel eingesetzt werden: Diphenylguanidin (DPG), Di-o-tolylguanidin (DOTG) und o-Tolylbiguanid (OTBG).

Als **Dithiophosphate** können beispielsweise eingesetzt werden: Zinkdialkydithiophosphate (Kettenlänge der Alkylreste C₂ bis C₁₆), Kupferdialkyldithiophosphate (Kettenlänge der Alkylreste C₂ bis C₁₆) und Dithiophoshorylpolysulfid.

Als Caprolactam kann beispielsweise Dithio-bis-caprolactam eingesetzt werden.

Als **Thioharnstoffderivate** können beispielsweise N,N'-Diphenylthioharnstoff (DPTU), Diethylthioharnstoff (DETU) und Ethylenthioharnstoff (ETU) eingesetzt werden.

Ebenso als Zusätze geeignet sind beispielsweise: Zinkdiamindiisocyanat, Hexamethylentetramin, 1,3-Bis(citraconimidomethyl)benzol sowie zyklische Disulfane.

Die genannten Zusätze als auch die Vernetzungsmittel können sowohl einzeln als auch in Mischungen eingesetzt werden. Bevorzugt werden folgende Substanzen für die Vernetzung der nitrilgruppenhaltigen Copolymerkautschuke eingesetzt: Schwefel, 2-Mercaptobenzthiazol, Tetramethylthiuramdisulfid, Tetramethylthiurammonosulfid, Zinkdibenzyldithiocarbamat, Dipentamethylenthiuramtetrasulfid, Zinkdialkydithiophosphat, Dimorpholyldisulfid, Tellurdiethyldithiocarbamat, Nickeldibutyldithiocarbamat, Zinkdibutyldithiocarbamat, Zinkdimethyldithiocarbamat und Dithiobiscaprolactam.

Die **Vernetzungsmittel** und zuvor genannten Zusätze können jeweils in Mengen von ca. 0,05 bis 10 phr, vorzugsweise 0,1 bis 8 phr, insbesondere 0,5 bis 5 phr (Einzeldosierung, jeweils bezogen auf die Wirksubstanz) bezogen auf den nitrilgruppenhaltigen Copolymerkautschuk eingesetzt werden.

Bei der Schwefelvernetzung ist es gegebenenfalls auch sinnvoll, zusätzlich zu den Vernetzungsmitteln und oben genannten Zusätzen auch weitere anorganische bzw. organische Substanzen mit zu verwenden, beispielsweise: Zinkoxid, Zinkcarbonat, Bleioxid, Magnesiumoxid, Calciumoxid, gesättigte oder ungesättigte organische Fettsäuren und deren Zinksalze, Polyalkohole, Aminoalkohole, wie zum Beispiel Triethanolamin sowie Amine wie zum Beispiel Dibutylamin, Dicyclohexylamin, Cyclohexylethylamin, Polyamine und Polyetheramine.

Bei der **Vernetzung mit Polyaminen** werden beispielsweise die freien CarboxylGruppen der zusätzlichen Monomereinheiten umgesetzt. Das Polyamin ist in keiner besonderen Weise begrenzt, solange der Vernetzer zumindest zwei oder mehr Amino-Gruppen aufweist oder eine Substanz ist, die zwei oder mehr Amino-Gruppen in-situ generiert. Vernetzer, bei denen eine Mehrzahl von Wasserstoffen eines aliphatischen oder aromatischen Kohlenwasserstoffes durch Amino-Gruppen oder Hydrazid-Strukturen (dargestellt als "CONHNH₂" wobei CO für eine Carbonyl-Gruppe steht), ist bevorzugt. Als Beispiele für Polyamin-Vernetzer seien im Folgenden beispielhaft genannt:
- aliphatische Polyamine, bevorzugt Hexamethylendiamin, Hexamethylendiamincarbamat, Tetramethylenpentamin, Hexamethylendiaminzimtaldehyd Addukte oder Hexamethylendiamindibenzoat-Salze,
- aromatische Polyamine, bevorzugt 2,2-bis-(4-(4-Aminophenoxy)phenyl)propan, 4,4'-Methylendianilin, m-Phenylendiamin, p-Phenylendiamin, 4,4'-(4,4'-Isopropylidenediphenyl-1,1'-diyldioxy)dianilin
- oder 4,4'-Methylen-bis-(o-chloranilin);
- Substanzen mit mindestens zwei Hydrazinstrukturen, bevorzugt Isophtalsäuredihydrazid, Adipinsäuredihydrazid oder Sebazinsäuredihydrazid.

Besonders bevorzugte Polyamine sind Hexamethylendiamin, Hexamethylendiaminmonocarbamat und 4,4'-(4,4'-Isopropylidenediphenyl-1,1'-diyldioxy)dianilin. Die Menge an Polyamin-Vernetzer in der vulkanisierbaren Mischung liegt im Bereich von 0,2 bis 20 Gew.-%, bevorzugt im Bereich von 1 bis 15 Gew.-% und besonders bevorzugt im Bereich von 1,5 bis 10 Gew.-% bezogen auf 100 Gew.-% Polymer.

### Verfahren zur Herstellung einer vulkanisierbaren Mischungen enthaltend nitrilgruppenhaltigen Copolvmerkautschuk

Gegenstand der Erfindung ist ferner ein Verfahren zur Herstellung vulkanisierbarer Mischungen enthaltend nitrilgruppenhaltigen Copolymerkautschuk durch Mischung des nitrilgruppenhaltigen Copolymerkautschuks mit mindestens einem Vernetzer und den optional weiteren enthaltenen Komponenten. Dieser Mischvorgang kann in allen in der Gummiindustrie üblichen Mischaggregaten, wie z.B. Innenmischern, Banbury Mischer oder Walzen, durchgeführt werden. Die Reihenfolge der Zudosierung ist für den Fachmann durch geeignete Versuche ohne Probleme ermittelbar.

Beispielhaft sind nachfolgend zwei Varianten dargestellt, wie vorgegangen werden kann:

### Verfahren A: Herstellung im Innenmischer

Bevorzugt sind Innenmischer mit sogenannter "ineinandergreifender" Rotorgeometrie.

Zum Startzeitpunkt erfolgt die Beschickung des Innenmischers mit dem in Ballenform vorliegenden nitrilgruppenhaltigen Copolymerkautschuk und es kommt zur Zerkleinerung der Ballen. Nach einem geeigneten Mischzeitraum erfolgt die Zugabe der Füllstoffe und Additive. Das Mischen erfolgt unter Kontrolle der Temperatur mit der Maßgabe, dass das Mischgut für eine geeignete Zeit bei einer Temperatur im Bereich von 130 bis 150°C verbleibt. Nach einem weiteren geeigneten Mischzeitraum erfolgt die Zugabe der weiteren Mischungsbestandteile wie optional Stearinsäure, Antioxidantien, Weichmacher, Weißpigmente (beispielsweise Titandioxid), Farbstoffen und sonstigen Verarbeitungswirkstoffen. Nach einem weiteren geeigneten Mischzeitraum wird der Innenmischer gelüftet und der Schacht gereinigt. Nach einem weiteren geeigneten Zeitraum wird der Innenmischer unter Erhalt der vulkanisierbaren Mischung entleert. Unter geeigneten Zeiträumen sind einige Sekunden bis einige Minuten zu verstehen. Die so hergestellten vulkanisierbaren Mischungen können in üblicher Weise, etwa durch die Mooney-Viskosität, durch Mooney-Scorch oder durch einen Rheometertest beurteilt werden.

### Verfahren B: Herstellung auf der Walze

Werden Walzen als Mischaggregate verwendet, kann in analoger Weise und Reihenfolge bei der Zudosierung vorgegangen werden.

### Verfahren zur Herstellung von Vulkanisaten enthaltend nitrilgruppenhaltigen Copolymerkautschuk

Gegenstand der Erfindung ist ferner das **Verfahren zur Herstellung von Vulkanisaten** enthaltend nitrilgruppenhaltige Copolymerkautschuke **(Vulkanisation),** dadurch gekennzeichnet, dass die vulkanisierbaren Mischungen enthaltend nitrilgruppenhaltige Copolymerkautschuke der Vulkanisation unterworfen werden, bevorzugt bei Temperaturen im Bereich von 100°C bis 250°C, besonders bevorzugt bei Temperaturen im Bereich von 150°C bis 200°C und ganz besonders bevorzugt von 160°C bis 200°C. Die vulkanisierbare Mischungen wird hierzu mit Kalandern, Walzen oder Extrudern weiterverarbeitet. Die vorgeformte Masse wird sodann in Pressen, Autoklaven, Heißluftanlagen oder in sogenannten automatischen Mattenvulkanisationsanlagen ("Auma") vulkanisiert, wobei sich Temperaturen im Bereich von 120°C bis 200°C, bevorzugt 140°C bis 190°C bewährt haben. Die Vulkanisationszeit beträgt typischerweise 1 Minute bis 24 Stunden und bevorzugt 2 Minuten bis 1 Stunde. Abhängig von der Form und der Größe der Vulkanisate kann eine zweite Vulkanisation durch erneutes Erhitzen notwendig sein, um eine vollständige Vulkanisation zu erreichen.

### Vulkanisate

Gegenstand der Erfindung sind ferner die so erhältlichen Vulkanisate basierend auf nitrilgruppenhaltigen Copolymerkautschuken. Die Vulkanisate können als Formartikel vorliegen, die z.B. als von Riemen, Walzen, Schuhkomponenten, Dichtungen, Schläuche, Dämpfungselemente, Statoren oder Kabelmäntel, bevorzugt Antriebsriemen verwendet werden können. Die zuvor genannten Verfahren zur Herstellung der Vulkanisate können zur Herstellung von Formteilen jeder Art verwendet werden.

### Verwendung

Gegenstand der Erfindung ist auch die **Verwendung** der Vulkanisate basierend auf den erfindungsgemäßen nitrilgruppenhaltigen Copolymerkautschuken zur Herstellung von Formkörpern, bevorzugt von solchen, die durch Extrusion oder Spritzguss hergestellt werden.

### Formteile

Gegenstand der Erfindung sind ferner **Formteile**, basierend auf den erfindungsgemäßen nitrilgruppenhaltigen Copolymerkautschuken. Die hierfür beispielsweise einsetzbaren Methoden wie Molding, Spritzguss- oder Extrusionsverfahren sowie die entsprechende Spritzgiessvorrichtungen oder Extruder sind dem Fachmann hinlänglich bekannt. Bei der Herstellung dieser Formteile können den erfindungsgemäßen nitrilgruppenhaltigen Copolymerkautschuken noch die gängigen, dem Fachmann bekannten und von ihm mit üblichem Fachwissen geeignet auszuwählenden Hilfsmittel wie z.B. Füllstoffe, Füllstoffaktivatoren, Beschleuniger, Vernetzer, Ozonschutzmittel, Antioxidationsmittel, Verarbeitungsöle, Extenderöle, Weichmacher, Aktivatoren oder Anvulkanisationshemmer zugesetzt werden.

Der **Vorteil** der Erfindung liegt insbesondere darin, dass der erfindungsgemäße nitrilgruppenhaltige Copolymerkautschuk eine geringere Glastemperatur bei gleichbleibender Ölbeständigkeit aufweist als konventionelle Typen mit gleichem Acrylnitrilgehalt.

### Beispiele:

### Messverfahren:

Der **RDB-Gehalt (Restdoppelbindungsgehalt)** in % wird durch die folgende FT-IR Messung bestimmt: Die Aufnahme der IR-Spektren des nitrilgruppenhaltigen Copolymerkautschuks vor, während und nach der Hydrierung erfolgt durch ein IR-Gerät mit der Bezeichnung Thermo Nicolet FT-IR Spektrometer Type AVATAR 360. Dazu wird eine monochlorbenzolische Lösung des nitrilgruppenhaltigen Copolymerkautschuks auf einen NaCl-Plättchen aufgebracht, zu einem Film getrocknet und vermessen. Der Hydriergrad wird mittels FT-IR Analyse nach der ASTM D 567095 Methode ermittelt.

Die Bestimmung der Werte für die **Mooney-Viskosität** (ML1+4@100°C) erfolgt jeweils mittels eines Scherscheibenviskosimeters nach DIN 53523/3.

Die Bestimmung des Molekulargewichts erfolgt durch Gelpermeationschromatographie (GPC). Verwendet wurde ein modulares System mit Shodex RI-71 Differentialrefraktometer, Autosampler S 5200 (Firma SFD), Säulenofen (ERC-125), Pumpe Shimadzu LC 10 AT und einer Säulenkombination aus 3 "mixed-B" Säulen von Polymer Labs. Als Lösungsmittel diente Tetrahydrofuran, die enthaltenen Molekulargewichte beziehen sich auf Polystyrol-Standards der Firma PSS (Mainz). Die Messungen wurden bei 40°C und einer Fließgeschwindigkeit von 1 ml/min in Tetrahydrofuran durchgeführt.

Die Bestimmung der molekularen Parameter wie Zahlenmittel des Molekulargewichts Mₙ, Massenmittel des Molekulargewichts M_{w} und dem daraus resultierenden Polydispersitätsindex PDI erfolgt aus dem RI-Signal mittels der Software "Empower 2 data base" der Firma Waters.

Der **Stickstoffgehalt** zur Bestimmung des ACN-Gehalts wird in den nitrilgruppenhaltigen Copolymerkautschuken gemäß QS 01960 nach LECO TruSpec bestimmt. Verbrennung der Einwaage im CHN-Automaten bei etwa 950°C in reinem Sauerstoff, Aliquotierung der Verbrennungsgase, Absorption der Störkomponenten und Detektion von N₂ durch WLD (Wärmeleitfähigkeitsmesszelle).

Die **Bestimmung der Mikrostruktur und des Termonomergehaltes** der einzelnen Polymere erfolgte mittels 1 H NMR (Gerät: Bruker DPX400 mit Software TopSpin 1.3, Messfrequenz 400 MHz, Lösemittel 1,1,2,2-Tetrachlorethan-d2).

Das **Vulkanisationsverhalten der Kautschukmischungen** wurde durch Verfolgung des Drehmoments in Abhängigkeit von der Vulkanisationszeit mit einem Moving Die Rheometer (MDR 2000E) bestimmt , wobei mit einem Winkel von 0,5° und einer Oszillationsfrequenz von 1,7 Hz bei 180°C für 30 Minuten gemessen wurde.

Für die **Zugprüfung** wurden 2 mm Platten durch Vulkanisation der vulkanisierbaren Mischung bei 180°C hergestellt. Aus diesen Platten wurden die hantelförmigen Prüfkörper ausgestanzt und nach ASTM D2240-81 die Zugfestigkeit und Dehnung bestimmt.

Die **Härte** wurde mit einem Durometer nach ASTM D2240-81 bestimmt.

Die **Glastemperatur** des nitrilgruppenhaltigen Copolymerkautschuks wurde mit Hilfe einer DSC Messung erhalten. Dafür wurden zwischen 10 und 15 mg der Probe in ein Aluminiumpfännchen eingewogen und versiegelt. Das Pfännchen wurde in einem DSC Gerät von Mettler Toledo des Typs DSC 821e / STAR SW 11.00 mit einer Heizrate von 20 K/Minute zweimal von -100°C auf 100°C aufgeheizt. Die Glasübergangstemperatur wurde aus der zweiten Aufheizkurve nach dem Standard Mittelwertverfahren bestimmt. Die **Glastemperatur** des Vulkanisats wurde mit Hilfe einer DSC Messung erhalten. Dafür wurden zwischen 10 und 15 mg der Probe in ein Aluminiumpfännchen eingewogen und versiegelt. Das Pfännchen wurde in einem DSC Gerät von TA Instruments mit einer Heizrate von 10 K/Minute zweimal von -150°C auf 150°C aufgeheizt. Die Glasübergangstemperatur wurde aus der zweiten Aufheizkurve nach dem Standard Mittelwertverfahren bestimmt.

Hantelförmige Probekörper, wie sie für die Zugprüfung verwendet werden, wurden zur Bestimmung der **Ölquellung** in einem geschlossenen Gefäß in IRM 903 Öl bei 150°C für 7 Tage gelagert. Im Anschluss wurden die Proben ausgemessen und ausgewogen und die Volumenquellung und Massezunahme bestimmt. Daran anschließend wurden die Zugfestigkeit und Dehnung nach ASTM D2240-81 bestimmt.

Die in den nachfolgenden Tabellen angegebenen Abkürzungen haben folgende Bedeutungen:
- **"RT"**: Raumtemperatur (23 ± 2°C)
- **"S min"**: ist das minimale Drehmoment der Vernetzungsisotherme
- **"S max"**: ist das maximale Drehmoment der Vernetzungsisotherme
- **"Delta S"**: ist "S max - S min"
- **"TS1"**: bedeutet die Zeit, bis die Mooney-Viskosität sich um eine Einheit erhöht hat nachdem das Mooney-Viskositäts-Minimum erreicht wurde, im Vergleich zum Ausgangspunkt
- **"TS2"**: bedeutet die Zeit, bis die Mooney-Viskosität sich um zwei Einheiten erhöht hat nachdem das Mooney-Viskositäts-Minimum erreicht wurde, im Vergleich zum Ausgangspunkt
- **"t 50"**: ist die Zeit, wenn 50% von S max erreicht werden
- **"t 90"**: ist die Zeit, wenn 90% von S max erreicht werden
- **"t 95"**: ist die Zeit, wenn 95% von S max erreicht werden
- **"M 10"**: Modul bei 10% Dehnung, gemessen bei RT
- **"M 25"**: Modul bei 25% Dehnung, gemessen bei RT
- **"M 50"**: Modul bei 50% Dehnung, gemessen bei RT
- **"M 100"**: Modul bei 100% Dehnung, gemessen bei RT
- **"M 300"**: Modul bei 300% Dehnung, gemessen bei RT
- **"EB"**: elongation at break (engl.), Bruchdehnung, gemessen bei RT
- **"TS"**: Tensile strength (engl.), Zugspannung, gemessen bei RT
- **"H"**: Hardness (engl.), Härte, gemessen bei RT

### Folgende Substanzen wurden in den Beispielen eingesetzt:

Die nachfolgenden Chemikalien wurden als Handelsprodukte der jeweils angegebenen Firmen bezogen oder stammen aus Produktionsanlagen der angegebenen Firmen.
- **"Prämix-Lösung Fe(II)SO₄"**: enthält 0,986 g Fe(II)SO₄*7 H₂O und 2,0 g Rongalit® C in 400 g Wasser
- **Rongalit C®**: Natriumsalz eines Sulfinsäurederivates (Handelsprodukt der BASF SE)
- **t-DDM**: tertiäres Dodecylmercaptan (Handelsprodukt der LANXESS Deutschland GmbH)
- **Disponil® SDS G**: Natrium-Laurylsulfat (Handelsprodukt der Cognis GmbH)
- **Trigonox® NT 50**: p-Menthanhydroperoxid; (Handelsprodukt der Akzo-Degussa)
- **Na-Salz der disproportionierten Harzsäure**: Arizona Chemical GmbH, CAS 61790-51-0
- **PEG5**: Poly(Ethylenglycol)methylethermethacrylat, Molekulargewicht 300 g/mol; Sigma-Aldrich
- **MEA**: 2-Methoxyethylacrylat, Alfa Aeser
- **Na₂CO3**: Handelsprodukt der Merck KGaA
- **Diethylhydroxylamin**: Handelsprodukt der Merck KGaA
- **Vulkanox® BKF**: 2,2'-Methylen-bis-(4-methyl-6-tert.-butyl-phenol) (Handelsprodukt der Lanxess Deutschland GmbH)

### Sonstige bei der Polymerisation oder in der vulkanisierbaren Zusammensetzung verwendeten Substanzen:

- **Corax® N330:**: Russ, kommerziell verfügbar von Orion Engineered Carbons
- **Rhenofit® DDA:**: 70%iger Masterbatch basierend auf octyliertem Diphenylamin, hergestellt von Rheinchemie
- **Vulkanox® ZMB2/C5:**: Zinksalz von 4- und 5-Methyl-2mercaptobenzthiazol, kommerziell verfügbar von Lanxess
- **Perkadox® 14-40:**: Di(ter.-butylperoxyisopropyl)benzol 40% geträgert auf Kieselsäure, kommerziell verfügbar von Akzo Nobel Polymer Chemicals BV
- **TAIC:**: Triallylisocyanurat, 70%iger Masterbatch, kommerziell verfügbar von Kettlitz Chemie GmbH & Co KG.
- **Maglite®:**: Magnesiumoxid, kommerziell verfügbar von CP Hall.

### I Herstellung der nitrilgruppenhaltigen Copolymerkautschuke (NBR) 1-3 (Erfindungsgemäße Beispiele)

Die Herstellung der in den folgenden Beispielserien eingesetzten NBR 1, 2 und 3 erfolgte nach der in Tabelle 1 angegebenen Basisrezeptur, wobei sämtliche Einsatzstoffe in Gew.-% bezogen auf 100 Gew.-% der Monomermischung angegeben sind. Tabelle 1 nennt auch die jeweiligen Polymerisationsbedingungen.

**Tabelle 1: Herstellung der nitrilgruppenhaltigen Copolymerkautschuke (NBR) 1-3 (erfindungsgemäße Beispiele mit einem Stern * gekennzeichnet).**

| **NBR** | **1*** | **2*** | **3*** |
|---|---|---|---|
| Butadien | 56 | 59 | 50 |
| Acrylnitril | 35 | 35 | 35 |
| 2-Methoxyethylacrylat (MEA) | 9 | - | 15 |
| Poly(ethyleneglycol)methylether methacrylat (PEG5) | - | 6 | - |
| Gesamt-Wassermenge | 190 | 190 | 190 |
| Disponil® SDS G | 2,2 | 2,2 | 2,2 |
| Na-Salz der disproportionierten Harzsäure | 0,5 | 0,5 | 0,5 |
| Na₂CO₃ | 0,12 | 0,12 | 0,12 |
| pH | 7,5±0,5 | 7,5±0,5 | 7,5±0,5 |
| t-DDM | 0,54 | 0,545 | 0,54 |
| Trigonox® NT 50 | 0,2 | 0,2 | 0,2 |
| Prämix-Lösung FeSO₄ | 0,014 | 0,025 | 0,02 |
| Diethylhydroxylamin | 0,2 | 0,2 | 0,2 |
| Vulkanox® BKF | 0,1 | 0,1 | 0,1 |
| Polymerisationstemperatur [°C] | 12±0,5 | 12±0,5 | 12±0,5 |
| Polymerisationsumsatz [%] | 76,8 | 72,2 | 75,8 |
| Polymerisationszeit [h] | 6,5 | 3,4 | 6,6 |

Die Herstellung der nitrilgruppenhaltigen Copolymerkautschuke erfolgte diskontinuierlich in einem 20 L (NBR1) oder 5 L-Autoklaven (NBR2 und NBR3) mit Rührwerk. Bei den Autoklavenansätzen wurden jeweils 5,4 kg (NBR1) oder 1,3 kg (NBR2 und NBR3) der Monomermischung und eine Gesamtwassermenge von 10,5 kg (NBR1) oder 2,5 kg (NBR2 und NBR3) sowie EDTA in einer äquimolaren Menge bezogen auf das Fe-II verwendet. Von dieser Wassermenge wurden 2,2 kg oder 9,4 kg mit dem Emulgator im Autoklaven vorgelegt und mit einem Stickstoffstrom gespült. Danach wurden die entstabilisierten Monomeren und die in Tabelle 1 angegebene Menge des Molekulargewichtsreglers t-DDM zugegeben, und der Reaktor verschlossen. Nach der Thermostatisierung des Reaktorinhalts wurden die Polymerisationen durch die Zugabe der Prämix-Lösungen und von para-Menthanhydroperoxid (Trigonox® NT50) gestartet. Der Polymerisationsverlauf wurde durch gravimetrische Umsatzbestimmungen verfolgt. Bei Erreichen der in Tabelle 1 angegebenen Umsätze wurde die Polymerisation durch Zugabe einer wässrigen Lösung von Diethylhydroxylamin abgestoppt. Nicht umgesetzte Monomere und sonstige flüchtige Bestandteile wurden mittels Wasserdampfdestillation entfernt. Die getrockneten NBR-Kautschuke wurden durch die Mooney-Viskosität, den ACN-Gehalt und die Glasübergangstemperatur charakterisiert und der Gehalt der Termonomere durch 1 H-NMR-Analyse bestimmt (Tabelle 2).

**Tabelle 2: Eigenschaften der nitrilgruppenhaltigen Copolymerkautschuke (NBR) 1-3 (erfindungsgemäße Beispiele mit einem Stern * gekennzeichnet)**

| **NBR** | **1*** | **2*** | **3*** |
|---|---|---|---|
| **ACN-Gehalt [Gew.-%]** | 33,6 | 34,6 | 33,6 |
| **Mooney Viskosität ML(1+4@100°C) (Mu)** | 25 | 36 | 28 |
| **Termonomer** | MEA | PEG5 | MEA |
| **Einbau Termonomer [Gew.-%]** | 4,8 | 4,1 | 7,7 |
| **Glasübergangstemperatur Tg [°C]** | -23 | -26 | -26 |

### II Herstellung der hydrierten nitrilgruppenhaltigen Copolymerkautschuke (HNBR)

### Durchführung der Hydrierungen

Die folgenden Hydrierungen wurden unter Verwendung der zuvor synthetisierten nitrilgruppenhaltigen Copolymerkautschuke (NBR) 1*-3* durchgeführt.

Trockenes Monochlorbenzol (MCB) wurde von VWR bezogen und wie erhalten eingesetzt. Die Ergebnisse der Hydrierversuche sind in Tabelle 2 zusammengefasst.

Die Hydrierungen 1-3 wurden in einem 10 L Hochdruck-Reaktor unter den folgenden Bedingungen durchgeführt:

| | |
|---|---|
| Lösungsmittel: | Monochlorbenzol |
| Feststoffkonzentration: | 13 Gew.-% NBR-Terpolymer in MCB (518 g) |
| Reaktortemperatur: | 137 - 140°C |
| Reaktionszeit: | bis zu 4 Stunden |
| Katalysator & -ladung: | Wilkinson Katalysator: 112,2 g (0,065 phr); Co-Katalysator: Triphenylphosphin: 11,7 g (1,0 phr) |
| Wasserstoffdruck (p H₂): | 8,4 MPa |
| Rührerdrehzahl: | 600 rpm |

Die NBR-Terpolymer enthaltende Polymerlösung wird 3 Mal mit H₂ (23°C, 2 MPa) unter kräftigem Rühren entgast. Die Temperatur des Reaktors wurde auf 100°C und der H₂-Druck auf 6 MPa angehoben. 123,9 g einer chlorbenzolischen Lösung bestehend aus Wilkinson Katalysator (112,2 g) und Triphenylphosphin (11,7 g) wurden zugeben und der Druck auf 8,4 MPa angehoben, während die Reaktortemperatur auf 138°C eingestellt wurde. Beide Parameter wurden während der Reaktion konstant gehalten. Der Reaktionsverlauf wurde mittels Messung des Restdoppelbindungsgehaltes (RDB) des nitrilgruppenhaltigen Copolymerkautschuks mittels IR-Spektroskopie verfolgt. Die Reaktion wurde nach höchstens 4 Stunden und/oder Erreichen eines RDB-Gehaltes von <1% durch Ablassen des Wasserstoffdrucks beendet. Der mittels IR ermittelte RDB-Endwert wurde mittels ¹H-NMR-Spektroskopie überprüft.

### III Herstellung von Vulkanisaten des hydrierten nitrilgruppenhaltigen Copolymerkautschuks:

### Herstellung der vulkanisierbaren Mischungen:

**HNBR 1*:** Hydriertes Nitril-Butadien-Methoxyethylacrylat Terpolymer mit einem ACN-Gehalt von 33,6%, einem Methoxyethylacrylat (MEA) Gehalt von 4,8% und einer Mooney-Viskosität, (ML 1+4 @100°C) von 67.

**HNBR 2*:** Hydriertes Nitril-Butadien-Methoxyethylacrylat Terpolymer mit einem ACN-Gehalt von 34,6%, einem Polyethylenglycolacrylat (PEG5) Gehalt von 4,1% und einer Mooney-Viskosität, (ML 1+4 @100°C) von 88.

**HNBR 3*:** Hydriertes Nitril-Butadien-Methoxyethylacrylat Terpolymer mit einem ACN-Gehalt von 33,6%, einem Methoxyethylacrylat (MEA) Gehalt von 7,7% und einer Mooney-Viskosität, (ML 1+4 @100°C) von 72.

**HNBR 4 (Therban 3407):** Kommerziell verfügbares, hydriertes Nitril-Butadien Copolymer mit einem ACN-Gehalt von 34%, einem Restdoppelbindungsgehalt kleiner 0,9% und einer Mooney-Viskosität, (ML 1+4 @100°C) von 70.

**Tabelle 4: Zusammensetzung der vulkanisierbaren Mischungen (erfindungsgemäße Beispiele mit einem Stern * gekennzeichnet).**

| **Beispiel** | **1*** | **2*** | **3*** | **4** |
|---|---|---|---|---|
| **Kautschuk** | **Teile** | **Teile** | **Teile** | **Teile** |
| HNBR 1 * | 100 | | | |
| HNBR 2* | | 100 | | |
| HNBR 3* | | | 100 | |
| HNBR 4 | | | | 100 |

| **Andere Komponenten** | **phr** | **phr** | **phr** | **phr** |
|---|---|---|---|---|
| CORAX N330 | 30 | 30 | 30 | 30 |
| RHENOFIT DDA | 1,4 | 1,4 | 1,4 | 1,4 |
| VULKANOX ZMB2/C5 | 0,4 | 0,4 | 0,4 | 0,4 |
| PERKADOX 14-40 | 7 | 7 | 7 | 7 |
| TAIC 70% | 1,5 | 1,5 | 1,5 | 1,5 |
| MAGLITE | 2 | 2 | 2 | 2 |

Alle Kautschukmischungen wurden auf einem Mischwalzwerk hergestellt. Der Durchmesser der Walzen war 80 mm, die Länge 200 mm. Die Walzen wurden auf 40°C vorgewärmt, die Geschwindigkeit der vorderen Walze war 16,5 RPM, die der hinteren Walze 20 PRM, wodurch eine Friktion von 1:1,2 erreicht wurde.

Der Kautschuk wurde vorgelegt und eine (1) Minute gemischt, bis sich ein glattes Walzfell gebildet hat. Nachfolgend wurde zuerst der Ruß, dann die Additive und zuletzt die Vernetzungschemikalien eingemischt. Insgesamt betrug die Mischzeit 5 bis 8 Minuten.

**Tabelle 5: Vulkanisationsverhalten der Kautschukmischungen**

| **MDR 180°C** | | **1*** | **2*** | **3*** | **4** |
|---|---|---|---|---|---|
| S' min | dNm | 1,27 | 1,61 | 1,22 | 1,41 |
| S' max | dNm | 17,77 | 17,96 | 17,65 | 20,71 |
| S' Ende | dNm | 17,62 | 17,85 | 17,48 | 20,64 |
| Delta S' | dNm | 16,5 | 16,35 | 16,43 | 19,3 |
| TS 1 | s | 33 | 32 | 32 | 32 |
| TS 2 | s | 43 | 41 | 42 | 41 |
| t 50 | s | 112 | 109 | 111 | 117 |
| t 90 | s | 308 | 310 | 305 | 330 |
| t 95 | s | 390 | 401 | 387 | 426 |

Die Formkörper für die Durchführung der weiteren Bestimmungen wurden durch Vulkanisation bei 180°C für 10 Minuten hergestellt.

**Tabelle 6: Physikalische Eigenschaften der ungealterten Vulkanisate**

| **Zugprüfung** | | **1*** | **2*** | **3*** | **4** |
|---|---|---|---|---|---|
| **2 mm Platten bei 180°C für 10 Minuten vulkanisiert** | | | | | |
| M 10 | MPa | 0,6 | 0,6 | 0,5 | 0,6 |
| M 25 | MPa | 1 | 0,9 | 0,9 | 1 |
| M 50 | MPa | 1,4 | 1,3 | 1,4 | 1,4 |
| M 100 | MPa | 2,5 | 2,3 | 2,7 | 2,8 |
| M 300 | MPa | 20,6 | 21,5 | 23,3 | 23,8 |
| EB | % | 347 | 347 | 331 | 322 |
| TS | MPa | 26 | 27 | 28 | 27 |
| H | ShA | 63 | 62 | 61 | 62 |

**Tabelle 7: Glasübergangstemperatur der ungealterten Vulkanisate**

| **Glasübergangstemperatur** | **1*** | **2*** | **3*** | **4** |
|---|---|---|---|---|
| Tg (DSC, °C) | -29 | -29 | -28 | -26 |

**Tabelle 8: Physikalische Eigenschaften der in Heißluft gealterten Vulkanisate**

| **Zugprüfung** | | **1*** | **2*** | **3*** | **4** |
|---|---|---|---|---|---|
| **Alterung der Vulkanisate in Heißluft, 168 h bei 150°C** | | | | | |
| M10 | MPa | 0,8 | 0,8 | 0,8 | 0,8 |
| M 25 | MPa | 1,5 | 1,4 | 1,4 | 1,4 |
| M 50 | MPa | 2,3 | 2,3 | 2,3 | 2,1 |
| M 100 | MPa | 4,9 | 4,8 | 5,2 | 4,8 |
| M 300 | MPa | 24,2 | 25,2 | 29,1 | - |
| EB | % | 337 | 338 | 298 | 261 |
| TS | MPa | 27,6 | 28,8 | 29,1 | 23,7 |
| H | ShA | 71 | 70 | 71 | 69 |

**Tabelle 9: Veränderung der Vulkanisateigenschaften bei Alterung in Heißluft**

| **Änderung** | | **1*** | **2*** | **3*** | **4** |
|---|---|---|---|---|---|
| **Alterung der Vulkanisate in Heißluft, 168 h bei 150°C** | | | | | |
| Δ EB | % | -3 | -3 | -10 | -19 |
| Δ TS | % | 5 | 6 | 4 | -12 |
| Δ H | ShA | 8 | 8 | 10 | 8 |

**Tabelle 10: Alterung der Vulkanisate in IRM 903**

| **Zugprüfung** | | **1*** | **2*** | **3*** | **4** |
|---|---|---|---|---|---|
| **Alterung der Vulkanisate in IRM 903, 168 h bei 150°C** | | | | | |
| M 10 | MPa | 0,5 | 0,4 | 0,5 | 0,4 |
| M 25 | MPa | 0,8 | 0,8 | 0,8 | 0,8 |
| M 50 | MPa | 1,2 | 1,2 | 1,3 | 1,3 |
| M 100 | MPa | 2,6 | 2,3 | 2,8 | 3 |
| M 300 | MPa | -- | -- | -- | -- |
| EB | % | 267 | 273 | 233 | 233 |
| TS | MPa | 18,1 | 18,9 | 15,7 | 16,3 |
| H | ShA | 56 | 55 | 56 | 54 |

**Tabelle 11: Veränderung der Vulkanisateigenschaften bei Alterung in Öl**

| **Änderung** | | **1*** | **2*** | **3*** | **4** |
|---|---|---|---|---|---|
| **Alterung der Vulkanisate in IRM 903, 168 h bei 150°C** | | | | | |
| Δ EB | % | -23 | -21 | -30 | -28 |
| Δ TS | % | -31 | -31 | -44 | -39 |
| Δ H | ShA | -7 | -7 | -5 | -8 |
| Δ V | % | 16 | 17 | 15 | 21 |

Die Ölquellung (Δ V) ist ebenso wie die Glasübergangstemperatur (Tg) deutlich verringert in den Vulkanisaten basierend auf den erfindungsgemäßen Copolymerkautschuken 1*-3*, verglichen mit dem Vulkanisat basierend auf dem nicht erfindungsgemäßen HNBR 4.

## Patentansprüche

1. Nitrilgruppenhaltiger Copolymerkautschuk, enthaltend
a) **10 bis 60 Gew.-%,** bevorzugt 20 bis 50 Gew.-% und besonders bevorzugt 34 bis 43 Gew.-% einer α,β-ethylenisch ungesättigten **Nitrileinheit,**
b) **31 bis 89,0 Gew.-%,** besonders bevorzugt 42 bis 78,75 Gew.-% und ganz besonders bevorzugt 49 bis 64,5 Gew.-% einer konjugierten **Dieneinheit** und
c) **1 bis 9 Gew.-%,** bevorzugt 1,25 bis 8 Gew.-% und besonders bevorzugt 1,5 bis 8 Gew.-% zumindest einer α,β-ethylenisch ungesättigten **Monocarbonsäuren Monoestereinheit.**

2. Nitrilgruppenhaltiger Copolymerkautschuk nach Anspruch 1, **dadurch gekennzeichnet, dass**
• die Glastemperatur, gemessen nach der in der Beschreibung angegebenen Messmethode, einen Wert von -20°C unterschreitet, bevorzugt einen Wert von -23°C unterschreitet und besonders bevorzugt einen Wert von -25°C unterschreitet, und
• die Ölquellung, gemessen nach der in der Beschreibung angegebenen Messmethode, einen Wert von 20%, bevorzugt einen Wert von 18% und besonders bevorzugt einen Wert von 15% nicht überschreitet.

3. Nitrilgruppenhaltiger Copolymerkautschuk nach Anspruch 1 oder 2, **dadurch gekennzeichnet, dass** der **Grad der Hydrierung** der konjugierten Dieneinheiten (b) 50% oder mehr, bevorzugt 75% oder mehr und besonders bevorzugt 85% oder mehr beträgt.

4. Nitrilgruppenhaltiger Copolymerkautschuk nach einem der Ansprüche 1 bis 3, **dadurch gekennzeichnet, dass** die α,β-ethylenisch ungesättigten **Nitrileinheiten (a)** bevorzugt Acrylnitril, Methacrylnitril, Ethacrylnitril oder Mischungen davon sind und ganz besonders bevorzugt **Acrylnitril** ist.

5. Nitrilgruppenhaltiger Copolymerkautschuk nach einem der Ansprüche 1 bis 4, **dadurch gekennzeichnet, dass** die konjugierten **Dieneinheiten (b)** 1,3-Butadien, Isopren, 2,3-Dimethylbutadien, 1,3-Pentadiene (Piperylen) oder Gemische davon, bevorzugt **1,3-Butadien** sind.

6. Nitrilgruppenhaltiger Copolymerkautschuk nach einem der Ansprüche 1 bis 5, **dadurch gekennzeichnet, dass** die α,β-ethylenisch ungesättigten **Monocarbonsäuren Monoester (c)** Methoxyethyl(meth)acrylat, 2-Ethylhexyl(meth)acrylat oder Polyethylenglycol(meth)acrylat, bevorzugt Methoxy- oder Ethoxy-Polyethylenglycol(meth)acrylat mit 1 bis 20 Ethylenglycol-Wiederholungseinheiten, bevorzugt Methoxy- oder Ethoxy-Polyethylenglycol(meth)acrylat mit 1 bis **5 Ethylenglycol-Wiederholungseinheiten** ist.

7. **Verfahren** zur Herstellung nitrilgruppenhaltiger Copolymerkautschuke nach einem der Ansprüche 1 bis 6, **dadurch gekennzeichnet, dass** sie durch Emulsionspolymerisation erfolgt.

8. **Vulkanisierbare Mischungen** enthaltend nitrilgruppenhaltige Copolymerkautschuke nach einem der Ansprüche 1 bis 6 und mindestens einen Vernetzer.

9. **Verfahren zur Herstellung von vulkanisierbaren Mischungen** nach Anspruch 8, durch Mischen eines nitrilgruppenhaltigen Copolymerkautschuks nach einem der Ansprüche 1 bis 6 mit mindestens einem Vernetzer.

10. **Verfahren zur Herstellung von Vulkanisaten** basierend auf nitrilgruppenhaltigen Copolymerkautschuken, **dadurch gekennzeichnet, dass** die vulkanisierbaren Mischungen nach Anspruch 8 der Vulkanisation unterworfen werden, bevorzugt bei Temperaturen im Bereich von 100°C bis 200°C, besonders bevorzugt bei Temperaturen im Bereich von 120°C bis 200°C und ganz besonders bevorzugt von 130°C bis 200°C.

11. **Vulkanisat** basierend auf nitrilgruppenhaltigen Copolymerkautschuken nach einem der Ansprüche 1 bis 6.

12. **Verwendung** des nitrilgruppenhaltigen Copolymerkautschuks nach einem der Ansprüche 1 bis 6 zur Herstellung von Formteilen, bevorzugt durch Extrusions- und Spritzgussverfahren.

13. **Verwendung** des nitrilgruppenhaltigen Copolymerkautschuks gemäß Anspruch 10 zur Herstellung von Riemen, Walzen, Schuhkomponenten, Dichtungen, Schläuche, Dämpfungselemente, Statoren oder Kabelmäntel, bevorzugt Antriebsriemen.

14. **Formteile** basierend auf nitrilgruppenhaltigem Copolymerkautschuk nach einem der Ansprüche 1 bis 6.

15. **Formteile** erhältlich gemäß Anspruch 10.
